# EUROPÄISCHE PATENTSCHRIFT

(11) **EP 3 403 708 B1**
(45) Veröffentlichungstag und Bekanntmachung des Hinweises auf die Patenterteilung: **16.12.2020**
(21) Anmeldenummer: 18164429.5
(22) Anmeldetag: 27.03.2018
(51) Int. Cl.: B01D 36/00

(54) **FILTERSYSTEM MIT ZENTRALELEMENT UND SIEBFILTER**
FILTER SYSTEM WITH CENTRAL ELEMENT AND SIEVE FILTER
SYSTÈME DE FILTRE À ÉLÉMENT CENTRAL ET FILTRE À TAMIS

(30) Priorität: 19.05.2017 DE 102017004813
(43) Veröffentlichungstag der Anmeldung: 21.11.2018
(73) Patentinhaber: Mann+Hummel GmbH, 71636 Ludwigsburg (DE)
(72) Erfinder: Ammersdörfer, Micha, 71642 Ludwigsburg (DE)
(74) Vertreter: Nickolaus, Mathias

(56) Entgegenhaltungen:
- WO-A1-2016/018673
- DE-A1-102008 038 160
- DE-A1-102015 012 473

## Beschreibung

### Technisches Gebiet

Die Erfindung betrifft ein Filtersystem zum Filtern eines Fluids mit einem Zentralelement und einem Siebfilter, insbesondere für einen Kraftstofffilter einer Brennkraftmaschine, sowie ein Filtergehäuse für ein solches Filtersystem.

### Stand der Technik

Aus DE 10 2013 009 198 A1 ist ein Kraftstofffilter mit einem Filtergehäuse und mit einem elementseitigen und einem gehäuseseitigen elektrischen Anschlusselement bekannt, bei dem das elementseitige und das gehäuseseitige Anschlusselement bei einem in das Filtergehäuse eingebauten Filterelement elektrisch miteinander verbunden sind. In dem Filtergehäuse ist eine Führungsrampe mit einer Rampenfläche angeordnet. Beim Einstecken des Filterelements in das Filtergehäuse in axialer Richtung zur Filterachse mit der Anschlussstirnseite voran stoßen das elementseitige Anschlusselement und ein anderer Abschnitt der Anschlussstirnseite gegen die Rampenfläche. Durch Drehen des Filterelements im Filtergehäuse um die Filterachse in einem Drehsinn, der dem schraubenartigen Verlauf der Rampenfläche entspricht, und gleichzeitiges Bewegen des Filterelements in axialer Richtung auf die Anschlussstirnseite des Filtergehäuses zu wird das Filterelement entlang der Rampenfläche geführt. Das gehäuseseitige elektrische Anschlusselement ist am Ende der Rampenfläche angeordnet. Das elementseitige Anschlusselement verbindet sich dann elektrisch mit dem gehäuseseitigen Anschlusselement. Auf diese Weise wird das Filterelement in der korrekten Einbaulage im Filtergehäuse positioniert. Das Schließen der elektrischen Verbindung erfolgt durch die Dreh-/Steckbewegung des Filterelements.

Ferner ist aus DE 10 2015 012 473 A1 ein Filterelement bekannt, das einen hohlzylindrisch geformten Filtermedienkörper aufweist, in dessen Innenraum ein Zentralelement mit Siebfilter befestigt ist. Das Zentralelement kann insbesondere einen Wasserstandssensor aufweisen, der an einem ersten Ende Wasserdetektierungspins aufweist und an einem zweiten Ende Kontakte zum Anschluss an einen Messkreis. Das Zentralelement mit Siebfilter ist gegenüber dem Filtermedienkörper drehbar ausgestaltet, und an dem Ende mit den Kontakten sind Fangelemente vorgesehen, die eine Kontaktierung mit einem deckelseitigen Gegenkontakt beim Zuschrauben eines Filtergehäuses erlauben. Nachteilig hieran ist, dass das Zentralelement und der Siebfilter, welche erfahrungsgemäß einen Großteil der Kosten eines derartigen Filterelements ausmachen, bei jedem Wechsel mitgetauscht werden müssen.

Eine weitere Filtereinrichtung mit Filterelement und Siebfilter in einem mehrteiligen Gehäuse ist in DE 102008038160 A1 offenbart.

### Offenbarung der Erfindung

Hiervon ausgehend besteht eine Aufgabe der Erfindung darin, ein Filtersystem mit einem Siebfilter zu schaffen, welches einfach zu montieren und preisgünstig ist.

Weitere Aufgaben der Erfindung sind, ein Filtergehäuse und ein austauschbares Filterelement zur Verwendung in einem Filtersystem zu schaffen, welches einfach zu montieren und preisgünstig ist.

Die vorgenannten Aufgaben werden nach einem Aspekt der Erfindung gelöst von einem Filtersystem, umfassend ein Filtergehäuse mit einer Gehäuseachse, einem Gehäuseoberteil und einem Gehäuseunterteil entlang der Gehäuseachse, sowie ein Filterelement, das eine Rohfluidseite von einer Reinfluidseite fluiddicht trennt, wobei das Filterelement einen um eine Längsachse des Filterelements angeordneten Filterbalg umfasst, wobei an dem Filtergehäuse entlang der Gehäuseachse ein gehäuseseitiges Zentralelement mit einem Siebfilter befestigt ist, das in einen Innenraum des Filterelements ragt. Günstige Ausgestaltungen und Vorteile der Erfindung ergeben sich aus den weiteren Ansprüchen, der Beschreibung und der Zeichnung.

Es wird ein Filtersystem zum Filtern eines Fluids vorgeschlagen, umfassend ein Filtergehäuse mit einer Gehäuseachse, einem Gehäuseoberteil und einem Gehäuseunterteil entlang der Gehäuseachse, einen am Gehäuseoberteil angeordneten Einlassstutzen zum Zuführen eines zu filternden Fluids, einen am Gehäuseoberteil angeordneten Auslassstutzen zur Ableitung des gefilterten Fluids, sowie ein Filterelement, das eine Rohfluidseite von einer Reinfluidseite fluiddicht trennt, wobei das Filterelement einen um eine Längsachse des Filterelements angeordneten Filterbalg umfasst. An dem Filtergehäuse ist entlang der Gehäuseachse ein gehäuseseitiges Zentralelement mit einem Siebfilter befestigt, das in einen Innenraum des Filterelements ragt.

Ein Kraftstofffiltersystem mit einer mehrstufigen, z.B. dreistufigen, Wasserabscheidung weist als Endabscheider ein feinmaschiges Siebfilter als hydrophobe Sperre auf, damit im Filterbalg und in einer Koaleszenzstufe koaguliertes Wasser nicht auf die Reinfluidseite des Filtersystems gelangen kann, sondern an dem Siebfilter abgeschieden und aus dem Filtergehäuse abgeleitet werden kann. Erfindungsgemäß ist dieses Siebfilter an einem Zentralelement angeordnet, welches an dem Filtergehäuse befestigt ist, im Gegensatz zum Stand der Technik, bei dem der Siebfilter im Innern des Filterelements angeordnet und mit diesem fest verbunden ist.

Gemäß der Erfindung ist das an dem Zentralelement angeordnete Siebfilter dagegen mit dem Filtergehäuse verbunden und insbesondere vom Filterelement lösbar ausgeführt. Dabei kann das Zentralelement fest an dem Filtergehäuse angeordnet, beispielsweise mit dem Filtergehäuse verklebt, verschweißt oder auf ähnliche Weise fest verbunden sein. Alternativ ist jedoch auch möglich, dass das Zentralelement mit dem Filtergehäuse lösbar verbunden ist, beispielsweise abziehbar ist. Dadurch ist es möglich, das Zentralelement mit Siebfilter bedarfsweise auch auszutauschen.

Das Zentralelement ist zur Aufnahme des Filterelements vorgesehen, indem beispielsweise das Filterelement auf das Zentralelement aufgeschoben wird. Dadurch kann das Filterelement lösbar mit dem Zentralelement verbunden werden.

Der Vorteil einer separaten Anordnung des Zentralelements mit Siebfilter an dem Filtergehäuse und nicht am Filterelement besteht darin, dass das Filterelement beispielsweise bei Schmutzbeladung ohne den Siebfilter ausgetauscht werden kann, während der Siebfilter im Gehäuse verbleiben und weiterverwendet werden kann. Da der Siebfilter im Vergleich zum Filterelement aufgrund des Siebmaterials ein vergleichsweise teures Bauteil darstellt, können dadurch im Betrieb eines Filtersystems mit auswechselbarem Filterelement Kosten gespart werden.

Weiter kann das fest verbaute Zentralelement mit Siebfilter die Reinfluidseite des Filtersystems bei einem Wechsel des Filterelements vor Verschmutzung schützen, da die Reinfluidseite durch den Siebfilter gegen die Rohfluidseite abgedichtet ist und der Siebfilter auf diese Weise gröbere Schmutzteile von der Reinfluidseite fernhalten kann.

Ein weiterer Vorteil des fest verbauten Zentralelements mit Siebfilter besteht darin, dass ein Wasserstandssensor, beispielsweise ein sog. Water-in-Fuel (WIF)-Sensor, in das Zentralelement integriert angeordnet sein kann. Dabei kann eine störanfällige Kontaktstelle zwischen einer Leitung in dem Zentralelement und dem Sensor vermieden werden, da dieses Zentralelement bei einem Wechsel des Filterelements nicht gewechselt werden muss.

Gemäß einer vorteilhaften Ausgestaltung kann das Filtergehäuse eine innenliegende Aufnahme aufweisen, die zum Abdichten zwischen der Rohfluidseite und der Reinfluidseite und/oder zum radialen Zentrieren des Filterelements im Filtergehäuse bei einem bestimmungsgemäßen Zusammenwirken mit einem Zentrierelement des Filterelements vorgesehen ist. Die Aufnahme dient dabei zur Zentrierung des Filterelements im Filtergehäuse, so dass das Filterelement in der Gehäuseachse angeordnet werden kann. Außerdem kann die Aufnahme Dichtflächen zur Abdichtung zwischen Rohfluidseite und Reinfluidseite des Filtersystems aufweisen, an welchen Dichtungen des Filterelements zur Anlage kommen. So kann eine wirksame Abdichtung gewährleistet werden.

Gemäß einer vorteilhaften Ausgestaltung kann das Zentralelement über die Aufnahme mit dem Filtergehäuse verbunden sein. Das Zentralelement kann mit Hilfe der Aufnahme in der Gehäuseachse ausgerichtet und an dem Filtergehäuse befestigt sein. Dabei kann das Zentralelement fest mit dem Filtergehäuse verbunden, beispielsweise verklebt oder verschweißt sein. Alternativ ist jedoch auch möglich, dass das Zentralelement lösbar mit dem Filtergehäuse verbunden ist, beispielsweise über Verrastungen oder ähnliche Befestigungselemente, so dass das Zentralelement mit Siebfilter auch eventuell ausgetauscht werden kann.

Gemäß einer vorteilhaften Ausgestaltung kann die Aufnahme an dem Gehäuseoberteil angeordnet sein. Dadurch ist es möglich, bei Entfernen des Gehäuseoberteils von dem Gehäuseunterteil das an der Aufnahme angeordnete Filterelement mit dem Gehäuseoberteil aus dem Filtergehäuse zu entnehmen, um es dann von der Aufnahme und dem Zentralelement abzuziehen und auszutauschen.

Der Siebfilter ist adial außenliegend um das Zentralelement angeordnet. Das Zentralelement dient so als Träger für den mechanisch weniger stabilen Siebfilter, der auf diese Weise über das Zentralelement in dem Filtergehäuse befestigt werden kann. Auf diese Weise kann das abgeschiedene Wasser zwischen Zentralelement und Siebfilter durch die Schwerkraft nach unten ablaufen und aus dem Filtergehäuse abgeführt werden.

Gemäß einer vorteilhaften Ausgestaltung kann das Zentralelement wenigstens eine Leiterbahn aufweisen, welche zur elektrischen Kontaktierung eines an dem Zentralelement angeordneten oder mit dem Zentralelement verbundenen Sensors, insbesondere eines Wasserstandssensors, vorgesehen ist. Am unteren Ende des Zentralelements kann beispielsweise ein sog. Water-in-fuel (WIF)-Sensor angeordnet sein, welcher den Wasserstand des abgeschiedenen Wassers bestimmen kann und Ablassfunktionen des Filtersystems dadurch steuern kann. Die Kontaktierung eines solchen Sensors ist über eine in dem Zentralelement angeordnete Leiterbahn auf vorteilhafte Weise möglich.

Gemäß einer vorteilhaften Ausgestaltung kann die wenigstens eine Leiterbahn über wenigstens ein zentralelementseitiges elektrisches Anschlusselement mit wenigstens einem gehäuseseitigen elektrischen Anschlusselement verbunden sein. Im Fall einer lösbaren Anordnung des Zentralelements im Filtergehäuse kann auf diese Weise eine zuverlässige Kontaktierung der Leiterbahn und damit eines im Zentralelement angeordneten Sensors erfolgen.

Gemäß einer vorteilhaften Ausgestaltung können der Sensor und/oder ein Heizer in das Zentralelement integriert vorgesehen sein. Die Integration von Sensoren und/oder Heizern im Zentralelement erspart zusätzliche Kontaktierungsstellen zwischen Leiterbahn im Zentralelement und Sensor und/oder Heizer, wodurch mögliche Fehlerquellen vermieden werden können. Außerdem sind durch die integrierte Anordnung Sensoren und/oder Heizer durch das Zentralelement vor Beschädigung geschützt.

Nach einem weiteren Aspekt betrifft die Erfindung ein Filtergehäuse für ein Filtersystem, umfassend ein Gehäuseoberteil und ein Gehäuseunterteil mit einer Gehäuseachse, einen am Gehäuseoberteil angeordneten Einlassstutzen zum Zuführen eines zu filternden Fluids, einen am Gehäuseoberteil angeordneten Auslassstutzen zur Ableitung des gefilterten Fluids. An dem Filtergehäuse ist entlang der Gehäuseachse ein gehäuseseitiges Zentralelement mit einem Siebfilter angeordnet, wobei das Zentralelement zur lösbaren Aufnahme eines Filterelements vorgesehen ist.

Gemäß der Erfindung ist der an dem Zentralelement angeordnete Siebfilter mit dem Filtergehäuse verbunden. Dabei kann das Zentralelement fest an dem Filtergehäuse angeordnet, beispielsweise mit dem Filtergehäuse verklebt, verschweißt oder auf ähnliche Weise fest verbunden sein. Alternativ ist es jedoch auch möglich, dass das Zentralelement mit dem Filtergehäuse lösbar verbunden, beispielsweise abziehbar ist. Dadurch ist es möglich, das Zentralelement mit Siebfilter bedarfsweise auch auszutauschen. Dabei können Filterelement und Zentralelement mit Siebfilter separat getauscht werden.

Das Zentralelement ist zur Aufnahme des Filterelements vorgesehen, indem beispielsweise das Filterelement auf das Zentralelement aufgeschoben wird. Dadurch kann das Filterelement lösbar mit dem Zentralelement verbunden werden.

Ein Filterelement zum Filtern eines Fluids hat eine Längsachse und einen um die Längsachse angeordneten Filterbalg mit einer ersten Endscheibe an einer ersten Stirnseite und einer zweiten Endscheibe an einer zweiten Stirnseite, wobei das Filterelement zur Aufnahme eines Zentralelements mit einem Siebfilter in einen Innenraum des Filterbalgs bei der bestimmungsgemäßen Montage in einem Filtergehäuse eines Filtersystems vorgesehen ist.

Das Zentralelement ist zur Aufnahme des Filterelements vorgesehen, indem beispielsweise das Filterelement auf das Zentralelement aufgeschoben wird. Dadurch kann das Filterelement lösbar mit dem Zentralelement verbunden werden. Bei der Durchströmung des Filterelements mit Kraftstoff von einer radialen Außenseite ins Innere des Filterbalgs wird das im Kraftstoff gelöste Wasser im Filterbalg und in einer darauffolgenden Koaleszenzstufe koaguliert, so dass es dann an dem im Innenraum des Filterbalgs angeordneten Siebfilter abgeschieden werden kann. Dadurch ist eine effektive Wasserendabscheidung im Filtersystem möglich.

Gemäß einer vorteilhaften Ausgestaltung kann das Filterelement auf das Zentralelement aufschiebbar vorgesehen sein. Auf diese Weise ist eine einfache Montage des Filterelements im Filtergehäuse und damit im Filtersystem möglich. Das Filterelement kann so mit dem Filtergehäuse lösbar verbunden werden, so dass ein Austausch auf einfache Weise durchgeführt werden kann.

Gemäß einer vorteilhaften Ausgestaltung kann im Innenraum des Filterbalgs ein Mittelrohr zur Aufnahme des Zentralelements vorgesehen sein. Das Mittelrohr dient der Versteifung des Filterelement, indem es den Filterbalg gegen den Strömungsdruck des von außen nach innen strömenden Kraftstoffs stabilisiert. Weiter kann das Mittelrohr als Träger für ein Koaleszenzmedium dienen, um kleinere Wassertropfen zu größeren Wassertropfen zu koagulieren.

Gemäß einer vorteilhaften Ausgestaltung kann das Filterelement mit dem Filtergehäuse über Rastelemente verrastbar vorgesehen sein. Durch Rastelemente lässt sich das Filterelement an dem Filtergehäuse zuverlässig fixieren. Gleichzeitig kann über die Verrastung eine lösbare Verbindung vorgesehen sein, so dass das Filterelement bei Bedarf auch ausgetauscht werden kann.

Gemäß einer vorteilhaften Ausgestaltung kann die zweite Endscheibe Rastelemente zur Aufnahme in einem Filtergehäuse eines Filtersystems aufweisen. Durch Anordnung der Rastelemente an der zweiten Endscheibe lässt sich das Filterelement beispielsweise auf einfache Weise mit der Aufnahme im Gehäuseoberteil des Filtergehäuses verrasten und kann so zuverlässig mit dem Filtergehäuse verbunden werden.

Gemäß einer vorteilhaften Ausgestaltung kann radial innerhalb des Filterbalgs ein um die Längsachse angeordnetes Koaleszenzmedium vorgesehen ist. Das Koaleszenzmedium kann so wirksam im Kraftstoff gelöstes Wasser zu größeren Tropfen koagulieren, so dass die Wassertropfen an dem Siebfilter als Endabscheider abgeschieden werden können.

Gemäß einer vorteilhaften Ausgestaltung kann radial außenliegend an der ersten Endscheibe eine Dichtung sowie radial innenliegend an der zweiten Endscheibe eine Dichtung zur Abdichtung zwischen einer Rohfluidseite und einer Reinfluidseite bei der bestimmungsgemäßen Verwendung in einem Filtergehäuse eines Filtersystems vorgesehen sein. Diese Dichtungen können beim Einsetzen des Filterelements in das Filtergehäuse und Verschließen des Filtergehäuses zum einen im Zusammenwirken mit einer Dichtfläche auf der Innenseite des Gehäuseunterteils und zum anderen mit einer Dichtfläche auf der Außenseite der Aufnahme des Gehäuseoberteils die Rohfluidseite gegen die Reinfluidseite abdichten.

### Kurze Beschreibung der Zeichnungen

Weitere Vorteile ergeben sich aus der folgenden Zeichnungsbeschreibung. In den Zeichnungen sind Ausführungsbeispiele der Erfindung dargestellt. Die Zeichnungen, Beschreibung und Ansprüche enthalten zahlreiche Merkmale in Kombination. Der Fachmann wird die Merkmale zweckmäßigerweise auch einzeln betrachten und zu sinnvollen weiteren Kombinationen zusammenfassen. Es zeigen beispielhaft:
- Fig. 1: einen Längsschnitt durch ein Filtersystem nach einem Ausführungsbeispiel der Erfindung mit einem Filtergehäuse, an welchem ein Zentralelement mit einem Siebfilter befestigt ist;
- Fig. 2: einen Längsschnitt durch das Filtergehäuse mit Zentralelement und Siebfilter des Filtersystems aus Figur 1;
- Fig. 3: einen Längsschnitt durch das Filterelement des Filtersystems aus Figur 1.

### Ausführungsformen der Erfindung

In den Figuren sind gleiche oder gleichartige Komponenten mit gleichen Bezugszeichen beziffert. Die Figuren zeigen lediglich Beispiele und sind nicht beschränkend zu verstehen.

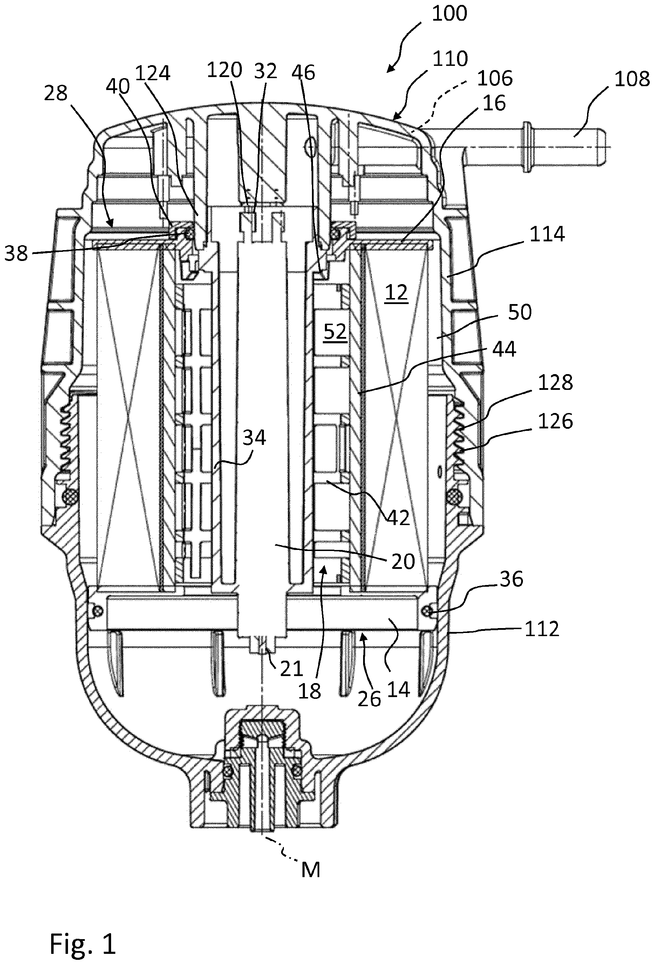

Figur 1 zeigt einen Längsschnitt durch ein Filtersystem 100 zum Filtern eines Fluids nach einem Ausführungsbeispiel der Erfindung mit einem Filtergehäuse 110, an welchem ein Zentralelement 20 mit einem Siebfilter 34 befestigt ist. Das Filtersystem 100 umfasst ein Filtergehäuse 110 mit einer Gehäuseachse M, einem Gehäuseoberteil 114 und einem Gehäuseunterteil 112 entlang der Gehäuseachse M, einen am Gehäuseoberteil 114 angeordneten Einlassstutzen 106 zum Zuführen eines zu filternden Fluids, und einen am Gehäuseoberteil 114 angeordneten Auslassstutzen 108 zur Ableitung des gefilterten Fluids. Der Einlassstutzen 106 ist im Schnitt nicht zu sehen und führt an der markierten Stelle das Fluid auf die Rohfluidseite 50 des Gehäuseoberteils 114. Weiter weist das Filtersystem 100 ein Filterelement 10 auf, das die Rohfluidseite 50 von der Reinfluidseite 52 fluiddicht trennt, wobei das Filterelement 10 einen um eine Längsachse L des Filterelements 10 angeordneten Filterbalg 12 umfasst. An dem Filtergehäuse 110 ist entlang der Gehäuseachse M ein gehäuseseitiges Zentralelement 20 mit einem Siebfilter 34 befestigt, das in einen Innenraum 18 des Filterelements 10 ragt. Der Siebfilter 34 ist radial außenliegend um das Zentralelement 20 angeordnet.

Gehäuseoberteil 114 und Gehäuseunterteil 112 sind über Schraubgewinde 126, 128 fluiddicht miteinander verbunden.

Das Filterelement 10 mit einer Längsachse L umfasst einen um die Längsachse L angeordneten Filterbalg 12 mit einer ersten Endscheibe 14 an einer ersten Stirnseite 26 und einer zweiten Endscheibe 16 an einer zweiten Stirnseite 28. Das Filterelement 10 ist zur Aufnahme des Zentralelements 20 mit dem Siebfilter 34 im Innenraum 18 des Filterbalgs 12 vorgesehen.

Das Filterelement 10 weist in seinem Innenraum 18 innerhalb des Filterbalgs 12 ein Mittelrohr 42 auf, das zur Versteifung des Filterbalgs 12 gegen den Strömungsdruck des gefilterten Fluids dient. Zwischen Filterbalg 12 und Mittelrohr 42 ist ein Koaleszenzmedium 44 angeordnet. Das Filterelement 10 wird mit dem Mittelrohr 42 auf das Zentralelement 20 mit Siebfilter 34 aufgeschoben, so dass der Siebfilter 34 radial innerhalb des Koaleszenzmediums 44 angeordnet ist und wirksam zur Endabscheidung des koagulierten Wassers dienen kann.

Das Filtergehäuse 110 weist eine innenliegende Aufnahme 124 auf, welche am Gehäuseoberteil 114 angeordnet ist, und welche zum Abdichten zwischen der Rohfluidseite 50 und der Reinfluidseite 52 und zum radialen Zentrieren des Filterelements 10 im Filtergehäuse 110 bei einem bestimmungsgemäßen Zusammenwirken mit einem Zentrierelement 40 des Filterelements 10 vorgesehen ist. Das Zentralelement 20 ist an der Aufnahme 124 befestigt, beispielsweise verklebt oder verschweißt, und damit mit dem Filtergehäuse 110 verbunden.

Radial außenliegend an der ersten Endscheibe 14 des Filterelements 10 ist eine Dichtung 36 sowie radial innenliegend an der zweiten Endscheibe 16 eine Dichtung 38 zur Abdichtung zwischen der Rohfluidseite 50 und der Reinfluidseite 52 vorgesehen. So wird bei Aufschieben des Filterelements 10 auf das Zentralelement 20 das Filterelement 10 durch Anliegen des Zentrierelements 40 an der Aufnahme 124 auf der Gehäuseachse M zentriert. Weiter dichtet die Dichtung 38 des Filterelements 10 gegen die Aufnahme 124 Rohfluidseite 50 gegen Reinfluidseite 52 ab. Die andere Dichtung 36 liegt an der Innenseite des Gehäuseunterteils 112 an und dichtet so ebenso zuverlässig ab.

Das Filterelement 10 ist mit dem Filtergehäuse 110 über Rastelemente 46 verrastbar vorgesehen, wobei die Rastelemente 46 an der zweiten Endscheibe 16 angeordnet sind und zur Verrastung des Filterelements 10 mit der Aufnahme 124 und/oder dem Zentralelement 20 dienen können.

Das Zentralelement 20 weist Leiterbahnen 21 auf, welche zur elektrischen Kontaktierung eines an dem Zentralelement 20 angeordneten oder mit dem Zentralelement 20 verbundenen Sensors, insbesondere eines Wasserstandssensors wie einem WIF-Sensor, dienen können. Die Leiterbahnen 21 sind über zentralelementseitige elektrische Anschlusselemente 32 mit gehäuseseitigen elektrischen Anschlusselementen 120 verbunden. Sensoren und/oder Heizer können in das Zentralelement 20 integriert sein, sind jedoch in Figur 1 nicht dargestellt.

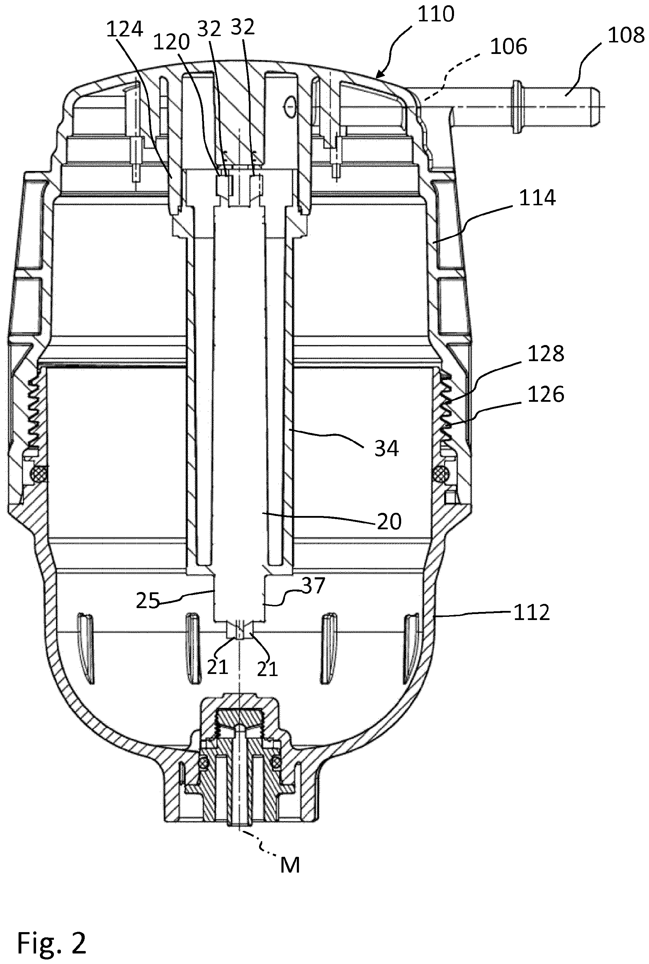

In Figur 2 ist ein Längsschnitt durch das Filtergehäuse 110 mit Zentralelement 20 und Siebfilter 34 des Filtersystems 100 aus Figur 1 dargestellt. Das Zentralelement 20 ist auf die Aufnahme 124 aufgeschoben und mit der Aufnahme 124 fest verbunden, beispielsweise verklebt oder verschweißt. Damit ist das Zentralelement 20 an dem Filtergehäuse 110 zuverlässig befestigt. Das Zentralelement 20 ist an seiner radialen Außenseite mit dem Siebfilter 34 umgeben. Die Leiterbahnen 21 sind über elektrische Anschlusselemente 32, welche im Zentralelement 20 angeordnet sind, mit elektrischen Anschlusselementen 120 auf Seiten des Gehäuseoberteils 114 verbunden.

Der untere Teil des Zentralelements 20 weist einen Stutzen 37 auf, welcher an seiner radialen Außenseite 25 zur Aufnahme einer Öffnung in der ersten Endscheibe 14 des Filterelements 10 dient und eine Dichtungskontur 25 aufweist, so dass das Zentralelement 20 an dem Stutzen 37 gegen die Endscheibe 14 abgedichtet wird.

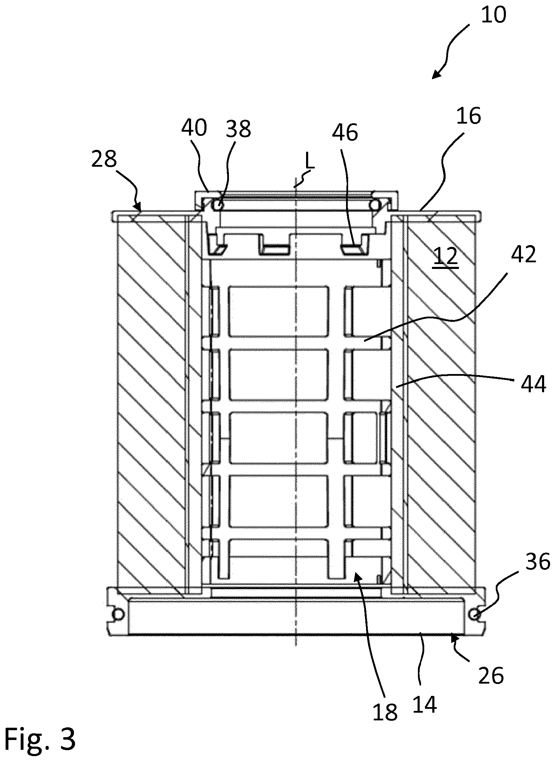

Figur 3 zeigt einen Längsschnitt durch das Filterelement 10 des Filtersystems 100 aus Figur 1. Das Filterelement 10 mit einer Längsachse L umfasst den um die Längsachse L angeordneten Filterbalg 12 mit der ersten Endscheibe 14 an der ersten Stirnseite 26 und der zweiten Endscheibe 16 an der zweiten Stirnseite 28.

Das Filterelement 10 weist in seinem Innenraum 18 innerhalb des Filterbalgs 12 das Mittelrohr 42 auf, das zur Versteifung des Filterbalgs 12 gegen den Strömungsdruck des gefilterten Fluids dient. Zwischen Filterbalg 12 und Mittelrohr 42 ist das Koaleszenzmedium 44 angeordnet.

Radial außenliegend an der ersten Endscheibe 14 des Filterelements 10 ist die Dichtung 36 sowie radial innenliegend an der zweiten Endscheibe 16 die Dichtung 38 zur Abdichtung zwischen der Rohfluidseite 50 und der Reinfluidseite 52 vorgesehen.

Die zweite Endscheibe 16 weist weiter das Zentrierelement 40 auf, welches die Dichtung 38 teilweise umfasst und zur Zentrierung des Filterelements 10 bei Aufschieben auf die Aufnahme 124 des Filtergehäuses 110, wie in Figur 1 dargestellt, dient.

## Patentansprüche

1. Filtersystem (100) zum Filtern eines Fluids, umfassend
- ein Filtergehäuse (110) mit einer Gehäuseachse (M), einem Gehäuseoberteil (114) und einem Gehäuseunterteil (112) entlang der Gehäuseachse (M),
- einen am Gehäuseoberteil (114) angeordneten Einlassstutzen (106) zum Zuführen eines zu filternden Fluids,
- einen am Gehäuseoberteil (114) angeordneten Auslassstutzen (108) zur Ableitung des gefilterten Fluids,
- ein Filterelement (10), das eine Rohfluidseite (50) von einer Reinfluidseite (52) fluiddicht trennt, wobei das Filterelement (10) einen um eine Längsachse (L) des Filterelements (10) angeordneten Filterbalg (12) umfasst,
wobei an dem Filtergehäuse (110) entlang der Gehäuseachse (M) ein von dem Filterelement (10) separat ausgebildetes, gehäuseseitiges Zentralelement (20) mit einem Siebfilter (34) befestigt ist, das in einen Innenraum (18) des Filterelements (10) ragt, wobei der Siebfilter (34) radial außen liegend um das Zentralelement (20) angeordnet ist.

2. Filtersystem nach Anspruch 1, wobei das Filtergehäuse (110) eine innenliegende Aufnahme (124) aufweist, die zum Abdichten zwischen der Rohfluidseite (50) und der Reinfluidseite (52) und/oder zum radialen Zentrieren des Filterelements (10) im Filtergehäuse (110) bei einem bestimmungsgemäßen Zusammenwirken mit einem Zentrierelement (40) des Filterelements (10) vorgesehen ist.

3. Filtersystem nach Anspruch 1 oder 2, wobei das Zentralelement (20) über die Aufnahme (124) mit dem Filtergehäuse (110) verbunden ist.

4. Filtersystem nach einem der vorhergehenden Ansprüche, wobei die Aufnahme (124) an dem Gehäuseoberteil (114) angeordnet ist.

5. Filtersystem nach einem der vorhergehenden Ansprüche, wobei das Zentralelement (20) wenigstens eine Leiterbahn (21) aufweist, welche zur elektrischen Kontaktierung eines an dem Zentralelement (20) angeordneten oder mit dem Zentralelement (20) verbundenen Sensors, insbesondere eines Wasserstandssensors, vorgesehen ist.

6. Filtersystem nach Anspruch 5, wobei die wenigstens eine Leiterbahn (21) über wenigstens ein zentralelementseitiges elektrisches Anschlusselement (32) mit wenigstens einem gehäuseseitigen elektrischen Anschlusselement (120) verbunden ist.

7. Filtersystem nach einem der Ansprüche 5 oder 6, wobei der Sensor und/oder ein Heizer in das Zentralelement (20) integriert vorgesehen sind.

8. Filtersystem nach einem der vorhergehenden Ansprüche, wobei das Filterelement (10) eine erste Endscheibe (14) an einer ersten Stirnseite (26) und eine zweite Endscheibe (16) an einer zweiten Stirnseite (28) umfasst.

9. Filtersystem nach Anspruch 8, wobei das Filterelement (10) auf das Zentralelement (20) aufschiebbar vorgesehen ist.

10. Filtersystem nach Anspruch 8 oder 9, wobei im Innenraum (18) des Filterbalgs (12) ein Mittelrohr (42) zur Aufnahme des Zentralelements (20) vorgesehen ist.

11. Filtersystem nach einem der Ansprüche 8 bis 10, wobei das Filterelement (10) mit dem Filtergehäuse (110) über Rastelemente (46) verrastbar vorgesehen ist.

12. Filtersystem nach Anspruch 11, wobei die zweite Endscheibe (16) Rastelemente (46) zur Aufnahme in einem Filtergehäuse (110) eines Filtersystems (100) aufweist.

13. Filtersystem nach einem der Ansprüche 8 bis 12, wobei radial innerhalb des Filterbalgs (12) ein um die Längsachse (L) angeordnetes Koaleszenzmedium (44) vorgesehen ist.

14. Filtersystem nach Ansprüchen 8 bis 13, wobei radial außenliegend an der ersten Endscheibe (14) eine Dichtung (36) sowie radial innenliegend an der zweiten Endscheibe (16) eine Dichtung (38) zur Abdichtung zwischen einer Rohfluidseite (50) und einer Reinfluidseite (52) bei der bestimmungsgemäßen Verwendung in einem Filtergehäuse (110) eines Filtersystems (100) vorgesehen sind.

15. Filtergehäuse (110) für ein Filtersystem (100), umfassend ein Gehäuseoberteil (114) und ein Gehäuseunterteil (112) mit einer Gehäuseachse (M),
- einen am Gehäuseoberteil (114) angeordneten Einlassstutzen (106) zum Zuführen eines zu filternden Fluids,
- einen am Gehäuseoberteil (114) angeordneten Auslassstutzen (108) zur Ableitung des gefilterten Fluids,
wobei an dem Filtergehäuse (110) entlang der Gehäuseachse (M) ein gehäuseseitiges Zentralelement (20) mit einem Siebfilter (34) angeordnet ist, wobei der Siebfilter (34) radial außen liegend um das Zentralelement (20) angeordnet ist und wobei das Zentraielement (20) zur lösbaren Aufnahme eines Filterelements (10) vorgesehen ist

## Claims

1. Filter system (100) for filtering a fluid, comprising
- a filter housing (110) having a housing axis (M), a housing upper part (114) and a housing lower part (112) along the housing axis (M),
- an inlet nozzle (106) arranged on the upper part (114) of the housing for supplying a fluid to be filtered,
- an outlet nozzle (108) arranged on the upper part (114) of the housing for discharging the filtered fluid,
- a filter element (10) which separates a raw fluid side (50) from a pure fluid side (52) in a fluid-tight manner, wherein the filter element (10) comprises a filter bellows (12) arranged around a longitudinal axis (L) of the filter element (10),
wherein a central element (20), which is formed separately from the filter element (10) and is on the housing side, is fastened to the filter housing (110) along the housing axis (M) and has a screen filter (34), which projects into an interior (18) of the filter element (10), the screen filter (34) being arranged around the central element (20) in a radially outer position.

2. Filter system according to claim 1, wherein the filter housing (110) has an internal receptacle (124) which is provided for sealing between the raw fluid side (50) and the clean fluid side (52) and/or for radially centering the filter element (10) in the filter housing (110) in a predetermined cooperation with a centering element (40) of the filter element (10).

3. Filter system according to claim 1 or 2, wherein the central element (20) is connected to the filter housing (110) via the receptacle (124).

4. Filter system according to one of the preceding claims, wherein the receptacle (124) is arranged on the upper part (114) of the housing.

5. Filter system according to one of the preceding claims, wherein the central element (20) has at least one conductor track (21) which is provided for the electrical contacting of a sensor, in particular a water level sensor, arranged on the central element (20) or connected to the central element (20).

6. Filter system according to claim 5, wherein the at least one conductor track (21) is connected via at least one electrical connection element (32) on the central element side to at least one electrical connection element (120) on the housing side.

7. Filter system according to one of claims 5 or 6, wherein the sensor and/or a heater are provided integrated in the central element (20).

8. Filter system according to one of the preceding claims, wherein the filter element (10) comprises a first end plate (14) on a first end face (26) and a second end plate (16) on a second end face (28).

9. Filter system according to claim 8, wherein the filter element (10) is provided to be slid onto the central element (20).

10. Filter system according to claim 8 or 9, wherein a central tube (42) for receiving the central element (20) is provided in the interior (18) of the filter bellows (12).

11. Filter system according to one of claims 8 to 10, wherein the filter element (10) is provided to be latchable with the filter housing (110) via latching elements (46).

12. Filter system according to claim 11, wherein the second end plate (16) has detent elements (46) for reception in a filter housing (110) of a filter system (100).

13. Filter system according to one of claims 8 to 12, wherein a coalescence medium (44) arranged around the longitudinal axis (L) is provided radially inside the filter bellows (12).

14. Filter system according to claims 8 to 13, wherein a seal (36) is provided radially outwardly on the first end disc (14) and a seal (38) is provided radially inwardly on the second end disc (16) for sealing between a raw fluid side (50) and a pure fluid side (52) during intended use in a filter housing (110) of a filter system (100).

15. Filter housing (110) for a filter system (100), comprising a housing upper part (114) and a housing lower part (112) with a housing axis (M),
- an inlet nozzle (106) arranged on the upper part (114) of the housing for supplying a fluid to be filtered,
- an outlet nozzle (108) arranged on the upper part (114) of the housing for discharging the filtered fluid,
wherein a housing-side central element (20) with a screen filter (34) is arranged on the filter housing (110) along the housing axis (M), wherein the screen filter (34) is arranged radially outwardly around the central element (20) and wherein the central element (20) is provided for detachably receiving a filter element (10).

## Revendications

1. Système de filtration (100) pour filtrer un fluide, comprenant
- un boîtier de filtre (110) ayant un axe de boîtier (M), une partie supérieure de boîtier (114) et une partie inférieure de boîtier (112) le long de l'axe de boîtier (M),
- une tubulure d'entrée (106) disposée sur la partie supérieure (114) du boîtier pour l'alimentation d'un fluide à filtrer,
- une tubulure de sortie (108) disposée sur la partie supérieure (114) du boîtier pour évacuer le fluide filtré,
- un élément filtrant (10) qui sépare de manière étanche aux fluides un côté fluide brut (50) d'un côté fluide pur (52), l'élément filtrant (10) comprenant un soufflet filtrant (12) disposé autour d'un axe longitudinal (L) de l'élément filtrant (10),
dans lequel un élément central (20) appartenant au boîtier est formé séparément de l'élément filtrant (10) et est fixé au boîtier de filtre (110) le long de l'axe du boîtier (M) et comporte un filtre à tamis (34) qui fait saillie dans un espace intérieur (18) de l'élément filtrant (10), le filtre à tamis (34) étant disposé autour de l'élément central (20) dans une position radialement extérieure.

2. Système de filtration selon la revendication 1, dans lequel le boîtier de filtre (110) présente un logement interne (124) qui est prévu pour l'étanchement entre le côté du fluide brut (50) et le côté du fluide pur (52) et/ou pour le centrage radial de l'élément filtrant (10) dans le boîtier de filtre (110) dans une coopération prédéterminée avec un élément de centrage (40) de l'élément filtrant (10).

3. Système de filtrage selon la revendication 1 ou 2, dans lequel l'élément central (20) est relié au boîtier du filtre (110) par le logement interne (124).

4. Système de filtrage selon l'une des revendications précédentes, dans lequel le logement interne (124) est disposé sur la partie supérieure (114) du boîtier.

5. Système de filtrage selon l'une des revendications précédentes, dans lequel l'élément central (20) présente au moins une piste conductrice (21) qui est prévue pour la mise en contact électrique d'un capteur, en particulier d'un capteur de niveau d'eau, disposé sur l'élément central (20) ou relié à l'élément central (20).

6. Système de filtrage selon la revendication 5, dans lequel la au moins une piste conductrice (21) est reliée par au moins un élément de connexion électrique (32) du côté de l'élément central (20) à au moins un élément de connexion électrique (120) du côté du boîtier.

7. Système de filtrage selon l'une des revendications 5 ou 6, dans lequel le capteur et/ou un chauffage sont prévus intégrés dans l'élément central (20).

8. Système de filtre selon l'une des revendications précédentes, dans lequel l'élément filtrant (10) comprend un premier disque d'extrémité (14) sur une première face d'extrémité (26) et un deuxième disque d'extrémité (16) sur une deuxième face d'extrémité (28).

9. Système de filtrage selon la revendication 8, dans lequel l'élément filtrant (10) est prévu pour être glissé sur l'élément central (20).

10. Système de filtrage selon la revendication 8 ou 9, dans lequel un tube central (42) destiné à recevoir l'élément central (20) est prévu à l'intérieur (18) du soufflet filtrant (12).

11. Système de filtrage selon l'une des revendications 8 à 10, dans lequel l'élément filtrant (10) est prévu pour être verrouillé avec le boîtier du filtre (110) par des éléments de verrouillage (46).

12. Système de filtrage selon la revendication 11, dans lequel le deuxième disque d'extrémité (16) comporte des éléments d'arrêt (46) pour la réception dans un boîtier de filtre (110) d'un système de filtrage (100).

13. Système de filtrage selon l'une des revendications 8 à 12, dans lequel un milieu de coalescence (44) disposé autour de l'axe longitudinal (L) est prévu radialement à l'intérieur du soufflet de filtrage (12).

14. Système de filtrage selon les revendications 8 à 13, dans lequel un joint (36) est prévu radialement à l'extérieur sur le premier disque d'extrémité (14) et un joint (38) est prévu radialement à l'intérieur sur le deuxième disque d'extrémité (16) pour assurer l'étanchéité entre un côté fluide brut (50) et un côté fluide pur (52) dans l'utilisation prévue dans un boîtier de filtre (110) d'un système de filtrage (100).

15. Boîtier de filtre (110) pour un système de filtrage (100), comprenant une partie supérieure de boîtier (114) et une partie inférieure de boîtier (112) avec un axe de boîtier (M),
- une tubulure d'entrée (106) disposée sur la partie supérieure (114) du boîtier pour l'alimentation d'un fluide à filtrer,
- une tubulure de sortie (108) disposée sur la partie supérieure (114) du boîtier pour évacuer le fluide filtré,
dans lequel un élément central (20) côté boîtier avec un filtre à tamis (34) est disposé sur le boîtier de filtre (110) le long de l'axe de boîtier (M), dans lequel le filtre à tamis (34) est disposé radialement vers l'extérieur autour de l'élément central (20) et dans lequel l'élément central (20) est prévu pour recevoir de manière amovible un élément filtrant (10).
